# EUROPEAN PATENT SPECIFICATION

(11) **EP 3 889 080 B1**
(45) Date of publication and mention of the grant of the patent: **17.07.2024**
(21) Application number: 19891416.0
(22) Date of filing: 26.07.2019
(51) Int. Cl.: B65D 90/00, B66C 1/06, B65G 47/92

(54) **MAGNETICALLY CONTROLLED SMART SORTING DEVICE FOR CONTAINER LOCKPINS, AND CONTROL METHOD THEREFOR**
MAGNETISCH GESTEUERTE INTELLIGENTE SORTIERVORRICHTUNG FÜR BEHÄLTERVERRIEGELUNGSBOLZEN UND STEUERVERFAHREN DAFÜR
DISPOSITIF DE TRI INTELLIGENT À COMMANDE MAGNÉTIQUE POUR GOUPILLES DE VERROUILLAGE DE RÉCIPIENT ET PROCÉDÉ DE COMMANDE ASSOCIÉ

(30) Priority: 01.12.2018 CN 201811460681
(43) Date of publication of application: 06.10.2021
(73) Proprietor: Shanghai Chengye Intelligent Technology Co., Ltd., Shanghai 200042 (CN)
(72) Inventor: WU, Chengji, Shanghai 200042 (CN); FANG, Hongxing, Shanghai 200042 (CN); LV, Kai, Shanghai 200042 (CN); CHENG, Keng, Shanghai 200042 (CN); WANG, Yong, Shanghai 200042 (CN)
(74) Representative: De Bonis, Paolo
(86) International application number: PCT/CN2019/097825
(87) International publication number: WO 2020/107914

(56) References cited:
- WO-A1-2017/072829
- CN-A- 104 227 726
- CN-A- 104 227 726
- CN-A- 104 670 899
- CN-A- 107 362 987
- CN-A- 109 292 453
- CN-U- 204 264 989
- CN-U- 204 264 989
- CN-U- 209 259 135
- DE-A1- 102006 004 295
- DE-A1- 102010 040 642
- DE-A1- 102010 040 642
- KR-A- 20180 062 066

## Description

The present invention claims priority to Chinese Patent Application No. 201811460681.4 filed with the CNIPA Dec. 1, 2018.

### TECHNICAL FIELD

The present invention belongs to the field of automatic control technology, and relates to a magnetically controlled device and a control method therefor.

### BACKGROUND

With the gradual recovery of the global economy, the seaborne volume has steadily increased, and the volume of the container loading and unloading at the port has been rising. However, due to the rapid growth of commodity prices, labor costs and other costs, the marginal profit of the port shows a downward trend. For this reason, the port turns to high technology to improve economic returns. With the rapid development of Internet of Things technology, the automatic operation of port loading and unloading has been further developed. In particular, the "unmanned terminal" characterized with the fully automatic operation provides excellent technical means for the port to reduce costs and increase benefits, and especially for those ports with large throughput, the transformation to the "unmanned terminal" is becoming more and more popular. At present, there are many ports in China that have been transformed into the "unmanned terminal", and due to the transformation, those ports have achieved remarkable effects of reducing costs and increasing benefits.

But the disassembly and assembly of the container lockpin (also known as twistlock, fixed lock, lock head, or Lockpin), an inconspicuous but indispensable process in the container loading and unloading at the "unmanned terminal", hinders the terminal automation from becoming truly "unmanned".

When the containers are stacked on board, in order to prevent the containers from being dumped and slipped and also to keep the containers well-arranged, there are lockpins at four corners of the container body to connect the upper container and the lower container. The operation process of the connection with the use of lockpins is as follows: after a container truck conveys containers to the terminal, four lockpins need to be installed on the four corners of the bottom of each container before the containers are hoisted and loaded onto the ship by a quay crane; in this way, when one container is stacked on top of another container, each lockpin on the upper container is automatically connected to the corresponding one on the lower container and thus the upper container is locked to the lower container; when the containers are unloaded to be transported to the container yard, the four lockpins at the bottom of each container must be removed so that the containers can be transported to the container yard by a container truck or a straddle.

At present, such an operation process is carried out manually. No matter the traditional terminal, unmanned terminal or automated terminal, the container lockpin is manually disassembled and assembled. As a result, two workers need to work at each bridge crane in one shift, there are three shifts a day, and thus a total of eight workers (including a replacement shift) are required.

As we all know in the field of port loading and unloading technology, the disassembly and assembly of container lockpins is a bottleneck problem that is difficult to solve in terminal automation technology. At present, the use of lockpins for marine containers is very complex, and there is no globally uniform standard for the specific configuration of lockpins. According to the relevant standards in China, container lockpins are roughly divided into split, integral, semiautomatic and fully automatic ones. Considering the existence of some fixed connecting locks, there are more than 100 kinds of container lockpins that need to be disassembled and assembled in at least six categories. Due to the competitive relationship among shipping companies, the structures of container lockpins of different shipping companies are often different from each other. In view of the different production times of different ships and the joint venture of different shipping companies on the same route, the form of the container lockpin of different ships on the same route may also differ from each other. Even for the same ship, a lockpin that is used for replacing the worn container lockpin may not be the same as the original lockpin, thus causing the same ship to be equipped with different types of container lockpins. In addition, due to the different requirements for lockpin reinforcement, the lockpins of different lock holes on the same container may also be different. For example, for a double-stack 20-foot container on deck, the twistlocks at the outer two corners are completely different from the connecting locks at the inner two corners. It can be seen that it is extremely difficult to develop a fully compatible automatic lockpin disassembly and assembly device. There is yet no device or system in the world that can fully achieve the automatic lockpin disassembly and assembly.

Of course, engineers and technicians in the industry are also trying to achieve automatic and unmanned lockpin operation, such as a design in which lockpins are disassembled and assembled by mechanical arms through a transfer platform. However, it is still impossible to solve the problem of automatic sorting, identification and compatibility of so many kinds of lockpins, and manual auxiliary operation is still required.

In view of this, it is the dream goal for terminal loading and unloading technical engineers to develop an automatic sorting, extraction and arrangement device for container lockpins that can be practically applied, so that the "unmanned terminal" can truly achieve the unmanned operation.

CN104227726A relates a permanent magnet adsorption mechanical arm, which recites: the permanent magnet adsorption mechanical arm includes an adsorption box 1, a screw rod 2, and a magnetic force module 3; the adsorption box 1 is cylindrical and is connected to the end of the moving arm 4 , the upper part of the adsorption box 1 is equipped with a rotary motor 5 with a vertical rotation axis, and the rotary output shaft of the lower part of the rotary motor 5 is fixedly connected with the screw rod 2, and the screw rod 2 penetrates deep into the adsorption box 1. The magnetic module 3 is assembled inside the adsorption box 1, and a connecting column 6 is fixed on the upper part. The top of the connecting column 6 is machined with a threaded hole for threaded assembly with the screw rod 2, and the magnetic force module 3 is wrapped with a small magnetic block 31 made of permanent magnetic material, a vertical limit column 7 fixed to the adsorption box 1 is designed at the edge of the magnetic force module 3, the lower plane of the adsorption box 1 is made of non-magnetic material.

CN204264989U relates a vehicle-mounted automatic pick-up device for metal objects, which recites: the vehicle-mounted automatic pick-up device for metal objects includes an adsorption body 1, the adsorption body 1 is mounted on the chassis of the vehicle, and also includes guide plates 2 arranged on both sides of the adsorption body 1. An electromagnetic chuck 3, which is arranged at the bottom of the adsorption body 1, is used for adsorbing metal objects, eddy current sensor 7, control circuit, display terminal, boom 4, universal joint 5 and telescopic joint 6; the eddy current sensor 7 is connected with the electromagnetic chuck 3 and is connected with the control circuit through the wire 8, and the control circuit is connected with the display terminal; the upper part of adsorption body 1 is fixed on the boom 4, and the boom 4 is arranged between the adsorption body 1 and the universal joint 5, the universal joint 5 is connected with the telescopic joint 6, and the telescopic joint 6 is fixedly connected with the chassis of the vehicle.

DE102010040642A1 relates a magnetic gripper (10) for a handling device, with a holding magnet (34) for attracting a workpiece to be gripped (16) for magnetic gripper (10), with an along a gripping direction (G) axially movable spacers (18) to bear against the workpiece (16), and with an along the gripping direction (G) axially movable compensating piston (26) is arranged on which the holding magnet (34), wherein the spacer (18) relative to the holding magnet (34) in the gripping direction (G) between a spaced position for releasing the workpiece (16) and a gripping position for holding the workpiece (16) is axially displaceable, the balance piston (26) in the gripping direction (G) between a foundation and a compensation layer can be displaced, and that the spacer (18) starting from the gripping position further in the gripping direction (G) is movable, wherein upon further displacement of the spacer (18) in the gripping direction (G) is shifted the balance piston (26) in the compensation layer.

CN107362987A discloses a robot sorting method and system based on a vision sense. The robot sorting method based on the vision sense includes the following steps that, a structured light system is adopted to obtain a downward three-dimensional model of a targeted part; the downward three-dimensional model of the targeted part is matched with a base part model of a base model base which is built in advance, and the type of the targeted part and a transformational matrix between the downward three-dimensional model of the targeted part and the corresponding base part model are obtained; first position information of the targeted part is obtained according to the transformational matrix and the base part model; second position information based on a robot coordinate is obtained according to the first position information of the targeted part; and the targeted part is picked up according to the second position information, and sorting of parts is achieved by combining the type of the targeted part.

### SUMMARY

The present invention provides a magnetically controlled smart sorting device for container lockpins according to claim 1, and a control method according to claim 6 therefor. After the container lockpin type is intelligently identified, with the use of a magnetically controlled gripper, a matched lockpin is selected from the lockpin basket according to a system instruction, extracted from the lockpin basket, and conveyed to a designated position, so that the intelligent automatic sorting and arrangement of the lockpins is achieved, thereby solving the problem in the existing art that the container lockpins cannot be automatically sorted, identified and compatible.

The invention is set out in the appended set of claims.

### BRIEF DESCRIPTION OF DRAWINGS

FIG. 1 is a structural diagram of a magnetically controlled smart sorting device for container lockpins according to the present invention.
FIG. 2 is a flowchart of a control method for a magnetically controlled smart sorting device for container lockpins according to the present invention.

### Reference list

- 1: bidirectional retractable component
- 2: bidirectional retractable component linkage
- 3: guide cylinder
- 4: guide column
- 5: universal joint
- 6: magnetically controlled gripper
- 7: magnetically controlled head
- 61: guide slope

### DETAILED DESCRIPTION

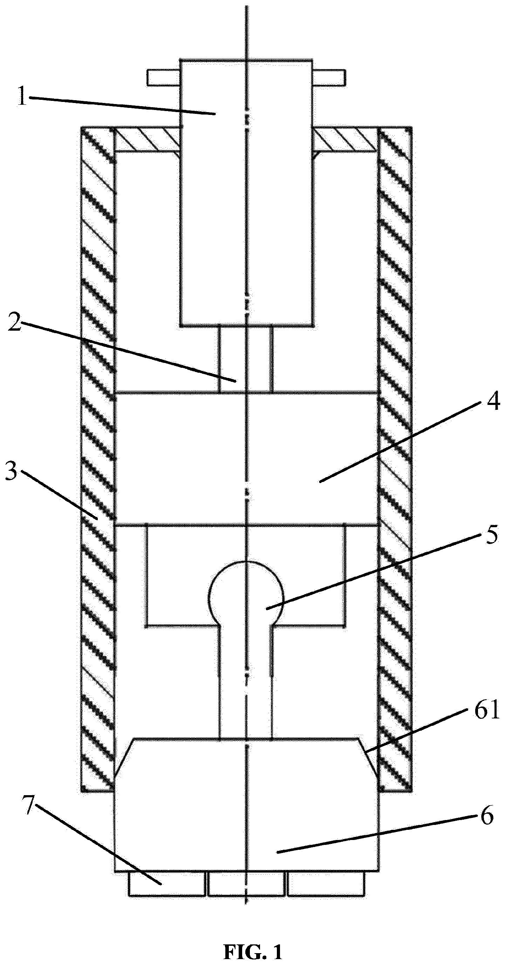

With reference to FIG. 1, the present invention provides a magnetically controlled smart sorting device for container lockpins. The magnetically controlled smart sorting device for container lockpins is provided with a magnetically controlled gripper 6. Three magnetically controlled heads 7 are attached to the lower portion of the magnetically controlled gripper 6. The number of the magnetically controlled heads 7 can be increased or reduced according to actual requirements. The universal joint 5 is mounted on the upper portion of the magnetically controlled gripper 6 and is fixed to the lower portion of the guide column 4.

The guide cylinder 3 is the main body of the magnetically controlled smart sorting device for container lockpins of the present invention. The bidirectional retractable component 1 is fixedly mounted at the upper end of the guide cylinder 3. The lower portion of the bidirectional retractable component 1 is connected to the bidirectional retractable component linkage 2. The bidirectional retractable component linkage 2 is the working part of the bidirectional retractable component 1 and is connected to the guide column 4. The guide column 4 is connected to the universal joint 5. The magnetically controlled gripper 6 is connected to the guide column 4 through the universal joint 5.

In this embodiment, the bidirectional retractable component 1 is configured to retract in the up-down direction. The bidirectional retractable component 1 may be a hydraulic retractable rod, a pneumatic retractable rod, an electric retractable rod, or the like.

In an embodiment, the lower portion of the bidirectional retractable component linkage 2 is connected to the guide column 4.

When the magnetically controlled gripper 6 presses against the selected lockpin, the universal joint 5 connected to the magnetically controlled gripper 6 adapts the magnetically controlled gripper to the shape of the matched lockpin so that the magnetically controlled head 7 can tightly attach the selected lockpin and extract the lockpin from the lockpin basket.

In order to increase the distance between the magnetically controlled gripper 6 and the inner wall of the guide cylinder 3, the upper edge of the magnetically controlled gripper 6 is provided with a guide slope 61. The angle of the guide slope 61 can be flexibly changed in accordance with the shape of the lockpin under the traction of the universal joint 5, so that the magnetically controlled head 7 can firmly attach the lockpin, firmly grippe the lockpin, and smoothly retract into the guide cylinder while releasing the extracted lockpin.

The guide slope 61 may be provided in an annular shape along the upper edge of the magnetically controlled gripper 6. The guide slope 61 may be provided in a circular or square shape according to the shape of the guide cylinder 3. The guide slope 61 is provided obliquely from top to bottom in a direction away from the bidirectional retractable component linkage 2.

The guide cylinder 3 may be made of a magnetism isolating material. The guide cylinder made of a magnetism isolating material is arranged outside the magnetically controlled smart sorting device for container lockpins, so that the magnetically controlled smart sorting device for container lockpins can extract any type of lockpin without limitation.

The bidirectional retractable component 1 may be driven by electric power, pneumatic power, or other power.

The magnetically controlled head 7 attached to the lower portion of the magnetically controlled gripper 6 may be a magnetically controlled head made of a permanent magnetically attractive material or a magnetically controlled head of an electromagnetic attraction structure.

The working process of the magnetically controlled smart sorting device for container lockpins of the present invention is as follows:
When the magnetically controlled smart sorting device for container lockpins obtains an instruction of extracting a lockpin, the device moves and lowers above the lockpin selected to be extracted in the lockpin basket. The bidirectional retractable component 1 pushes out the bidirectional retractable component linkage 2. The guide column 4 moves downward. The magnetically controlled gripper 6 extends out of the guide cylinder 3 and presses against the selected lockpin. The universal joint 5 connected to the magnetically controlled gripper 6 can make the magnetically controlled gripper adapt to various lockpin shapes, and then the magnetically controlled head 7 can tightly attach the selected lockpin and extract the selected lockpin from the lockpin basket.

When the magnetically controlled smart sorting device for container lockpins obtains an instruction of extracting a lockpin, the device moves and lowers above the lockpin selected to be extracted in the lockpin basket. The bidirectional retractable component 1 pushes out the bidirectional retractable component linkage 2. The guide column 4 moves downward. The magnetically controlled gripper 6 extends out of the guide cylinder 3 and presses against the selected lockpin. Since the universal joint 5 connected to the magnetically controlled gripper 6 can make the magnetically controlled gripper adapt to various lockpin shapes, the magnetically controlled head 7 can tightly attach the selected lockpin and extract the selected lockpin from the lockpin basket.

The upper edge of the magnetically controlled gripper 6 is provided with a guide slope 61. The guide slope 61 increases the distance between the magnetically controlled gripper 6 and the inner wall of the guide cylinder 3, and the angle of the guide slope 61 can be flexibly changed in accordance with the shape of the lockpin under the traction of the universal joint 5, so that the magnetically controlled head 7 can firmly attach the lockpin and firmly grippe the various types of lockpins and the magnetically controlled gripper 6 can smoothly retract into the guide cylinder 3 to prevent the magnetically controlled gripper 6 from being stuck by the cylinder wall of the guide cylinder.

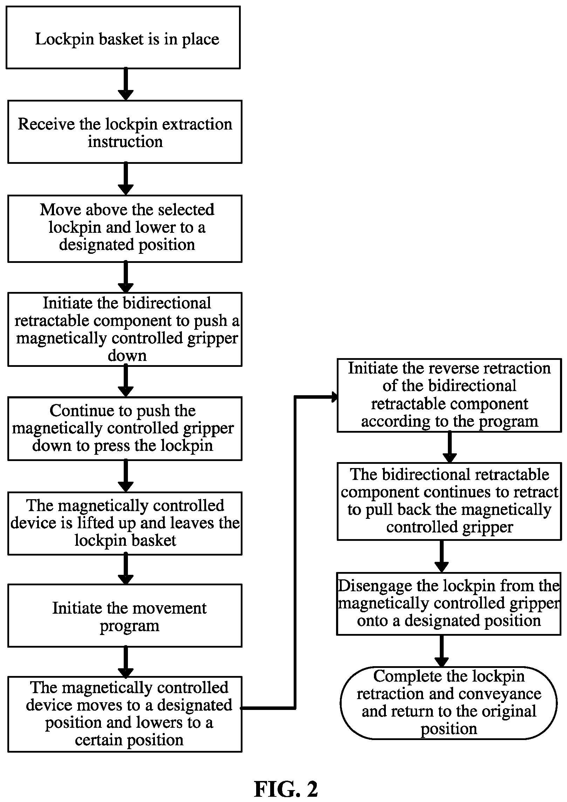

With reference to FIG. 2, the present invention further provides a control method for a magnetically controlled smart sorting device for container lockpins. The control steps are as follows: when a container lockpin basket is brought to a designated position, the smart sorting device receives an instruction of extracting a lockpin, selects a matched lockpin in the lockpin basket, moves above the lockpin and lowers to a certain position. The bidirectional retractable component linkage 2 is immediately activated to push downward the magnetically controlled gripper 6 until the magnetically controlled gripper 6 firmly attaches the lockpin to be extracted. At this point, the smart sorting device initiates the lifting program to extract the selected lockpin, is instructed to leave the lockpin basket, and delivers the extracted lockpin to a designated position.

After the smart sorting device with the extracted lockpin moves to the designated position, the smart sorting device lowers to a designated height, and the reverse retraction of the bidirectional retractable component is initiated according to the program. When the magnetically controlled gripper is retracted into the guide cylinder, the bidirectional retractable component continues to retract to disengage the magnetically controlled head from the lockpin, and the lockpin is disengaged onto a designated position. In this manner, the smart sorting device completes the extraction and conveyance of the lockpin and then returns to the original position.

The basic principle of the process of the magnetically controlled smart sorting device for container lockpins of the present invention is as follows:
The magnetically controlled smart sorting device for container lockpins of the present invention is a device consisting of a bidirectional retractable component, a guide column, a universal joint, a magnetically controlled gripper and a magnetically controlled head and can magnetically attach the container lockpin, and the guide cylinder casing the device is made of the magnetism isolating material and can extract any type of lockpin without limitation. Starting from the identification of the lockpin type, the device receives an instruction, finds a designated lockpin in the basket, pushes the magnetically controlled head to attach the lockpin through the bidirectional retractable component, extracts the lockpin from the basket, and conveys the extracted lockpin to a designated position. Then the device activates the bidirectional retractable component again, retracts the magnetically controlled head to disengage the lockpin, and conveys the designated lockpin (the same type) to the designated position. In this manner, the whole process can be automatically completed.

The relationship between the main processes of the present invention is described below in conjunction with FIG. 2.
(1) The magnetically controlled smart sorting device for container lockpins, after receiving an instruction of finding a designated lockpin, automatically moves to a position where the designated lockpin is located, and then the program of the magnetically controlled smart sorting device for container lockpins for extracting the designated lockpin is initiated.
(2) Lockpin extraction: the magnetically controlled smart sorting device for container lockpins initiates the extraction program. The bidirectional retractable component pushes the bidirectional retractable component linkage downward to make the magnetically controlled gripper to reach out of the guide cylinder and align with the designated lockpin, and continuously presses the lockpin down until all the magnetically controlled heads tightly attach the lockpin. After that, the bidirectional retractable component stops pushing down, the magnetically controlled smart sorting device for container lockpins lifts up as a whole, and the lockpin leaves the lockpin basket.
(3) Lockpin conveyance: the lockpin is lifted out of the lockpin basket and the conveyance procedure is initiated. The lockpin moves to a designated position where the lockpin is placed according to a designated path or by a fixed transmission facility until the lockpin is conveyed to the designated position.
(4) Lockpin placement: after the lockpin is conveyed to the designated position, the lockpin disengagement procedure is initiated. The bidirectional retractable component retracts the bidirectional retractable component linkage upward so that the magnetically controlled gripper is retracted into the guide cylinder. When the lockpin is blocked by the guide cylinder, the magnetically controlled gripper is continuously retracted, the magnetically controlled head is pulled and disengages the lockpin, the lockpin is placed at the designated position, and then the bidirectional retractable component stops the retraction movement.
(5) The magnetically controlled smart sorting device for container lockpins returns to the original position.

In practical application, the main process of the magnetically controlled smart sorting device for container lockpins of the present invention is as follows:
1. After receiving the instruction for extracting the lockpin, the device moves above the position of the designated lockpin according to the position instruction of the program, the magnetically controlled smart sorting device for container lockpins is lowered, and the program for extracting the lockpin is initiated.
2. After the lockpin extraction program is initiated, according to the built-in setting, the bidirectional retractable component initiates the downward pushing function and continuously presses the magnetically controlled gripper to the lockpin so that the magnetically controlled head can tightly attach the designated lockpin. After the lockpin is lifted, go to the next step.
3. After the lockpin is extracted and leaves the lockpin basket, the system initiates the conveyance procedure. The magnetically controlled smart sorting device for container lockpins conveys the extracted lockpin to the designated position, and after the magnetically controlled smart sorting device for container lockpins is lowered, the procedure goes to the next step.
4. After the lock pin is conveyed to the designated position, the system initiates the lockpin disengagement program. The bidirectional retractable component initiates the retraction function, and the magnetically controlled gripper continuously retracts into the guide cylinder, so that the guide cylinder blocks the lockpin until the magnetically controlled head is disengaged from the lockpin. The lockpin is automatically extracted, conveyed and replaced to the designated position, and then the device returns to the starting position and gets ready to circularly implement the automatic extraction and conveyance of the lockpin.

In an embodiment, the control method for the magnetically controlled smart sorting device for container lockpins includes the steps described below.

When a container lockpin basket is brought to a first designated position, the smart sorting device moves above a selected lockpin and lowers to a second designated position so that the bidirectional retractable component pushes the magnetically controlled gripper downward until the magnetically controlled gripper attaches the selected lockpin; the smart sorting device extracts the selected lockpin and conveys the extracted lockpin to a third designated position.

After the smart sorting device with the extracted lockpin moves to the third designated position, the smart sorting device lowers to a designated height, the bidirectional retractable component retracts the magnetically controlled gripper into the guide cylinder to disengage the magnetically controlled head from the lockpin, and the lockpin is disengaged onto a fourth designated position.

According to the magnetically controlled smart sorting device for container lockpins and the control method therefor of the present invention, the lockpins of different models can be automatically sorted, and the clamp for extracting the lockpin does not need to be replaced due to different models so that the manner of grabbing of the lockpins of various types by manual adaptation and compatible can be completely replaced, and even if the lockpins in one lockpin basket are not the same type, the lockpin can be freely extracted and automatically conveyed to a designated position, thereby breaking the bottleneck of automatic sorting of the container lockpin.

The magnetically controlled smart sorting device for container lockpins of the present invention adopts a magnetically controlled gripper. When the magnetically controlled lockpin gripper obtains a gripping instruction, the magnetically controlled lockpin gripper aligns with the lockpin that is selected to grip in a container lockpin basket according to the instruction. The device pushes the magnetically controlled gripper down by using the bidirectional retractable component, maintains pressure until the lockpin can be stably and firmly attracted, and then lifts the lockpin to a point where the lockpin is designated to be placed. The bidirectional retractable component is activated again and pulls the magnetically controlled gripper upward so that the lockpin which is magnetically attracted to the device is blocked by the guide cylinder and then disengaged. In this manner, the automatic gripping and conveying to the target is completed.

The magnetically controlled smart sorting device for container lockpins of the present invention adopts a magnetically controlled gripper, which can replace manual adaptation and compatibility of grabbing of lockpins of various types, thereby solving the problem that various types of lockpins require a plurality of different clamps but clamps cannot be frequently changed. Even if the lockpins in one lockpin basket are not the same type, the device of the present invention can still freely grip the lockpin.

In the present invention, a unique AI algorithm is embedded. Therefore, the device, with the use of the powerful functions of the AI technology, identifies different types of lockpins by scanning the lockpins in the lockpin basket, matches the type of lockpins required for the operation, issues a sorting instruction to the magnetically controlled sorting device, extracts the corresponding lockpins from the lockpin basket, and conveys the corresponding lockpins to a designated position.

According to the magnetically controlled smart sorting device for container lockpins and the control method therefor of the present invention, the smart identification of the container lockpin type can be achieved, and according to an instruction set by the system, the matched lockpin can be automatically selected, extracted from the lockpin basket, and conveyed to a designated position, thereby achieving the smart automatic sorting and arrangement of the lockpin.

## Claims

1. A magnetically controlled smart sorting device for container lockpins, comprising a guide cylinder (3), a guide column (4), a universal joint (5) and at least one magnetically controlled head (7); **characterised by** a bidirectional retractable component (1) mounted inside the guide cylinder (3), a bidirectional retractable component linkage (2), a magnetically controlled gripper (6),
wherein the bidirectional retractable component (1) is provided at an upper end of the guide cylinder (3), a lower portion of the bidirectional retractable component (1) is connected to the bidirectional retractable component linkage (2), the bidirectional retractable component linkage (2) is connected to the guide column (4), the universal joint (5) is fixedly mounted on a lower portion of the guide column (4), and a lower portion of the universal joint (5) is connected to the magnetically controlled gripper (6);
wherein the at least one magnetically controlled head (7) is attached to a lower portion of the magnetically controlled gripper (6), and each magnetically controlled head (7) of the at least one magnetically controlled head (7) is configured to attract a selected lockpin when the magnetically controlled gripper (6) presses against the selected lockpin;
wherein an upper edge of the magnetically controlled gripper (6) is provided with a guide slope (61).

2. The magnetically controlled smart sorting device for container lockpins of claim 1, wherein the guide cylinder (3) is made of a magnetism isolating material.

3. The magnetically controlled smart sorting device for container lockpins of claim 1, wherein the bidirectional retractable component (1) is electrically driven or pneumatically driven.

4. The magnetically controlled smart sorting device for container lockpins of claim 1, wherein the each magnetically controlled head (7) attached to the lower portion of the magnetically controlled gripper (6) is a permanent magnet-attracted magnetically controlled head.

5. The magnetically controlled smart sorting device for container lockpins of claim 1, wherein the each magnetically controlled head (7) attached to the lower portion of the magnetically controlled gripper (6) is a magnetically controlled head of an electromagnetic attraction structure.

6. A control method for the magnetically controlled smart sorting device for container lockpins of any one of claims 1 to 5, comprising:
in a case where a container lockpin basket is brought to a first designated position, moving the smart sorting device to above a selected lockpin, lowering the smart sorting device to a second designated position, to enable the bidirectional retractable component (1) to push the magnetically controlled gripper (6) downward until the magnetically controlled gripper (6) attaches the selected lockpin; extracting the selected lockpin by the smart sorting device and delivering to a third designated position by the smart sorting device;
in response to the smart sorting device with the extracted lockpin having been moved to the third designated position, lowering the smart sorting device to a designated height, to enable the magnetically controlled gripper (6) being retracted into the guide cylinder (3) through the bidirectional retractable component (1), so as to disengage the magnetically controlled head (7) from a lockpin and to disengage the lockpin onto a fourth designated position.

## Patentansprüche

1. Magnetisch gesteuerte intelligente Sortiervorrichtung für Behälterverriegelungsbolzen, umfassend einen Führungszylinder (3), eine Führungssäule (4), ein Universalgelenk (5) und mindestens einen magnetisch gesteuerten Kopf (7); **gekennzeichnet durch** ein ein- und ausfahrbares Bauteil (1), das in den Führungszylinder (3) eingebaut ist, ein Verbindungsstück (2) des ein- und ausfahrbaren Bauteils und einen magnetisch gesteuerten Greifer (6),
wobei das ein- und ausfahrbare Bauteil (1) an einem oberen Ende des Führungszylinders (3) vorgesehen ist, ein unterer Abschnitt des ein- und ausfahrbaren Bauteils (1) mit dem Verbindungsstück (2) des ein- und ausfahrbaren Bauteils verbunden ist, das Verbindungsstück (2) des ein- und ausfahrbaren Bauteils mit der Führungssäule (4) verbunden ist, das Universalgelenk (5) fest an einen unteren Abschnitt der Führungssäule (4) angebaut ist und ein unterer Abschnitt des Universalgelenks (5) mit dem magnetisch gesteuerten Greifer (6) verbunden ist;
wobei der mindestens eine magnetisch gesteuerte Kopf (7) an einem unteren Abschnitt des magnetisch gesteuerten Greifers (6) befestigt ist und jeder magnetisch gesteuerte Kopf (7) von dem mindestens einen magnetisch gesteuerten Kopf (7) dazu eingerichtet ist, einen ausgewählten Verriegelungsbolzen anzuziehen, wenn der magnetisch gesteuerte Greifer (6) gegen den ausgewählten Verriegelungsbolzen drückt;
wobei ein oberer Rand des magnetisch gesteuerten Greifers (6) mit einer Führungsschräge (61) versehen ist.

2. Magnetisch gesteuerte intelligente Sortiervorrichtung für Behälterverriegelungsbolzen nach Anspruch 1, wobei der Führungszylinder (3) aus einem Magnetismus isolierenden Material besteht.

3. Magnetisch gesteuerte intelligente Sortiervorrichtung für Behälterverriegelungsbolzen nach Anspruch 1, wobei das ein- und ausfahrbare Bauteil (1) elektrisch oder pneumatisch angetrieben wird.

4. Magnetisch gesteuerte intelligente Sortiervorrichtung für Behälterverriegelungsbolzen nach Anspruch 1, wobei jeder magnetisch gesteuerte Kopf (7), der an dem unteren Abschnitt des magnetisch gesteuerten Greifers (6) befestigt ist, ein von einem Permanentmagnet angezogener magnetisch gesteuerter Kopf ist.

5. Magnetisch gesteuerte intelligente Sortiervorrichtung für Behälterverriegelungsbolzen nach Anspruch 1, wobei jeder magnetisch gesteuerte Kopf (7), der an dem unteren Abschnitt des magnetisch gesteuerten Greifers (6) befestigt ist, ein magnetisch gesteuerter Kopf einer Konstruktion für elektromagnetische Anziehung ist.

6. Steuerungsverfahren für die magnetisch gesteuerte intelligente Sortiervorrichtung für Behälterverriegelungsbolzen nach einem der Ansprüche 1 bis 5, umfassend:
in einem Fall, in dem ein Behälterverriegelungsbolzenkorb in eine erste festgelegte Position gebracht wird, Bewegen der intelligenten Sortiervorrichtung bis über einen ausgewählten Verriegelungsbolzen, Absenken der intelligenten Sortiervorrichtung in eine zweite festgelegte Position, damit das ein- und ausfahrbare Bauteil (1) den magnetisch gesteuerten Greifer (6) nach unten drücken kann, bis der magnetisch gesteuerte Greifer (6) den Verriegelungsbolzen festmacht; Herausziehen des ausgewählten Verriegelungsbolzens mit der intelligenten Sortiervorrichtung und Abliefern in einer dritten festgelegten Position durch die intelligente Sortiervorrichtung;
als Reaktion darauf, dass die intelligente Sortiervorrichtung mit dem herausgezogenen Verriegelungsbolzen in die dritte festgelegte Position bewegt wurde, Absenken der intelligenten Sortiervorrichtung auf eine festgelegte Höhe, damit der magnetisch gesteuerte Greifer (6) durch das ein- und ausfahrbare Bauteil (1) in den Führungszylinder (3) zurückgezogen werden kann, um den magnetisch gesteuerten Kopf (7) von einem Verriegelungsbolzen zu lösen und den Verriegelungsbolzen auf einer vierten festgelegten Position freizugeben.

## Revendications

1. Dispositif de tri intelligent à commande magnétique pour goupilles de verrouillage de récipient, comprenant un cylindre de guidage (3), une colonne de guidage (4), un joint universel (5) et au moins une tête à commande magnétique (7) ; **caractérisé par**
un composant rétractable bidirectionnel (1) monté à l'intérieur du cylindre de guidage (3), une liaison de composant rétractable bidirectionnel (2), un préhenseur à commande magnétique (6),
dans lequel le composant rétractable bidirectionnel (1) est prévu au niveau d'une extrémité supérieure du cylindre de guidage (3), une partie inférieure du composant rétractable bidirectionnel (1) est reliée à la liaison de composant rétractable bidirectionnel (2), la liaison de composant rétractable bidirectionnel (2) est reliée à la colonne de guidage (4), le joint universel (5) est monté de manière fixe sur une partie inférieure de la colonne de guidage (4), et une partie inférieure du joint universel (5) est reliée au préhenseur à commande magnétique (6) ;
dans lequel l'au moins une tête à commande magnétique (7) est fixée à une partie inférieure du préhenseur à commande magnétique (6), et chaque tête à commande magnétique (7) de l'au moins une tête à commande magnétique (7) est configurée pour attirer une goupille de verrouillage sélectionnée lorsque le préhenseur à commande magnétique (6) appuie contre la goupille de verrouillage sélectionnée ;
dans lequel un bord supérieur du préhenseur à commande magnétique (6) est pourvu d'une pente de guidage (61).

2. Dispositif de tri intelligent à commande magnétique pour goupilles de verrouillage de récipient de la revendication 1, dans lequel le cylindre de guidage (3) est constitué d'un matériau isolant du magnétisme.

3. Dispositif de tri intelligent à commande magnétique pour goupilles de verrouillage de récipient de la revendication 1,
dans lequel le composant rétractable bidirectionnel (1) est entraîné électriquement ou pneumatiquement.

4. Dispositif de tri intelligent à commande magnétique pour goupilles de verrouillage de récipient de la revendication 1,
dans lequel chaque tête à commande magnétique (7) fixée à la partie inférieure du préhenseur à commande magnétique (6) est une tête à commande magnétique attirée par un aimant permanent.

5. Dispositif de tri intelligent à commande magnétique pour goupilles de verrouillage de récipient de la revendication 1,
dans lequel chaque tête à commande magnétique (7) fixée à la partie inférieure du préhenseur à commande magnétique (6) est une tête à commande magnétique d'une structure d'attraction électromagnétique.

6. Procédé de commande du dispositif de tri intelligent à commande magnétique pour goupilles de verrouillage de récipient de l'une quelconque des revendications 1 à 5, comprenant :
dans le cas où un panier de goupilles de verrouillage de récipient est amené vers une première position désignée, le déplacement du dispositif de tri intelligent au-dessus d'une goupille de verrouillage sélectionnée, l'abaissement du dispositif de tri intelligent jusqu'à une deuxième position désignée, pour permettre au composant rétractable bidirectionnel (1) de pousser le préhenseur à commande magnétique (6) vers le bas jusqu'à ce que le préhenseur à commande magnétique (6) fixe la goupille de verrouillage sélectionnée ; l'extraction de la goupille de verrouillage sélectionnée par le dispositif de tri intelligent et son acheminement vers une troisième position désignée par le dispositif de tri intelligent ;
en réponse au déplacement du dispositif de tri intelligent avec la goupille de verrouillage extraite vers la troisième position désignée, l'abaissement du dispositif de tri intelligent à une hauteur désignée, pour permettre au préhenseur à commande magnétique (6) d'être rétracté dans le cylindre de guidage (3) à travers le composant rétractable bidirectionnel (1), de manière à désengager la tête à commande magnétique (7) d'une goupille de verrouillage et à désengager la goupille de verrouillage sur une quatrième position désignée.
